# EUROPEAN PATENT SPECIFICATION

(11) **EP 1 699 102 B1**
(45) Date of publication and mention of the grant of the patent: **10.09.2008**
(21) Application number: 06251074.8
(22) Date of filing: 28.02.2006
(51) Int. Cl.: H01M 8/04, H01M 8/06, H01M 8/24

(54) **Power generating system using fuel cells**
Stromversorgungssystem mit Brennstoffzellen
Système de génération d'électricité utilisant des piles à combustible

(30) Priority: 04.03.2005 JP 2005061157
(43) Date of publication of application: 06.09.2006
(73) Proprietor: SHINKO ELECTRIC INDUSTRIES CO., LTD., Nagano-shi, Nagano 381-2287 (JP)
(72) Inventor: Horiuchi, Michio,, Nagano-shi Nagano 381-2287 (JP); Suganuma, Shigeaki,, Nagano-shi Nagano 381-2287 (JP); Watanabe, Misa,, Nagano-shi Nagano 381-2287 (JP); Tokutake, Yasue,, AZ 85226 (US)
(74) Representative: Finnie, Peter John

(56) References cited:
- EP-A- 1 420 472
- EP-A2- 1 508 932
- WO-A2-02/065564
- JP-A- 6 196 176
- DICKS A L ET AL: "A study of SOFC-PEM hybrid systems" JOURNAL OF POWER SOURCES, ELSEVIER, AMSTERDAM, NL, vol. 86, no. 1-2, March 2000 (2000-03), pages 501-506, XP004194165 ISSN: 0378-7753

## Description

### BACKGROUND OF THE INVENTION

### 1. Field of the Invention

The present invention relates to a power generating system using a fuel cell and, more particularly, to a fuel cell power generating system which can also generate power in a pretreatment process or in an exhaust gas treatment process related to the fuel cell main unit by using another fuel cell installed separately from the main unit.

### 2. Description of the Related Art

Heretofore, fuel cells have been developed and commercially implemented as a low-pollution power generating means to replace traditional power generation means such as thermal power generators, or as an electric energy source for electric vehicles that replaces the internal combustion engine which uses gasoline or the like, as fuel. Fuel cells are also attracting attention as a power supply source for personal computers, etc., and are finding widespread use as electric energy sources. For such fuel cells, much research effort has been expended to increase the efficiency and to reduce the cost of the fuel cell itself.

There are various types of fuel cells, such as solid polymer fuel cells, molten carbonate fuel cells, alkaline fuel cells, and phosphoric acid fuel cells, classified according to how they generate power, and a power generating system is constructed using one type of fuel cell selected from among these fuel cells, as disclosed, for example, in Japanese Unexamined Patent Publication Nos. 2003-51327 and 2004-356011.

In the above-mentioned fuel cell power generating system, any remaining unconsumed hydrogen, from the fuel cell apparatus, is supplied to a heating source of a fuel reforming apparatus provided on the upstream side of the fuel cell apparatus, and is used for combustion. Further, the steam generated in an exhaust gas treating apparatus provided on the downstream side of the fuel cell apparatus is used as the steam necessary for steam reforming in the fuel reforming apparatus.

While energy is effectively utilized within the fuel cell power generating system to enhance the energy efficiency of the system as a whole, the above solution for energy utilization does not directly contribute to enhancing the power generating efficiency of the fuel cell itself, and has had the problem that the energy utilization is not sufficient when it comes to increasing the amount of power generation of the fuel cell power generating system.

WO 02/065564 A discloses a fuel cell power generating system comprising two solid oxide fuel cells (SOFCs). The anode exhaust gas discharged from the first SOFC is supplied as a power generation fuel to the second SOFC acting as an exhaust gas treating system.

In view of this, it is an object of the present invention to provide a fuel cell power generating system wherein a solid oxide fuel cell is placed in an atmosphere containing fuel and oxygen or an atmosphere containing fuel and steam generated during the operation of the fuel cell apparatus provided in the power generating system, and wherein the solid oxide fuel cell is operated to generate power separately from the fuel cell apparatus, thereby increasing the electric power that can be extracted.

### SUMMARY OF THE INVENTION

To solve the above problem, a fuel cell power generating system according to the present invention comprises: a fuel cell apparatus having a fuel supply system and an exhaust gas treating system; an exhaust gas treating apparatus disposed in said exhaust gas system; a solid oxide fuel cell installed in said exhaust gas treating apparatus, having a solid oxide substrate, a cathode electrode layer formed on one surface of said substrate, and an anode electrode layer formed on the other surface of said substrate opposite from said one surface, wherein said exhaust gas discharged from said fuel cell apparatus is supplied as a power generation fuel to said solid oxide fuel cell, characterised in that, in said exhaust gas treating apparatus, a cathode side exhaust gas discharged from said fuel cell apparatus is supplied to said cathode electrode layer, and an anode side exhaust gas discharged from said fuel cell apparatus and part of said cathode side exhaust gas are supplied to said anode electrode layer, and said anode electrode layer is exposed to a premixed flame produced by said anode side exhaust gas and said cathode side exhaust gas.

In the exhaust gas treating apparatus, air may be supplied to the cathode electrode layer of the solid oxide fuel cell.

A mixed gas of the cathode side exhaust gas and the anode side exhaust gas discharged from the fuel cell apparatus may be supplied to the anode electrode layer of the solid oxide fuel cell, and the anode electrode layer may be exposed to the premixed flame produced by the mixture gas.

Further, in the fuel cell power generating system of the present invention, a fuel pretreating apparatus for pretreating a fuel by heating of a combustion device before supplying the fuel to the fuel cell apparatus may be disposed in the fuel supply system, and the solid oxide fuel cell may be mounted within the combustion device in the fuel pretreating apparatus.

Air may be supplied to the cathode electrode layer of the solid oxide fuel cell, a flame produced by the combustion device may be supplied to the anode electrode layer of the solid oxide fuel cell, and the anode side exhaust gas discharged from the fuel cell apparatus may be supplied to the combustion device.

The solid oxide fuel cell may be placed with the cathode electrode layer facing the combustion device so that the cathode electrode layer is exposed to the flame produced by the combustion device, and the anode electrode layer of the solid oxide fuel cell may be exposed to a pretreating atmosphere in the fuel pretreating apparatus; further, air and the anode side exhaust gas discharged from the fuel cell apparatus may be supplied to the combustion device.

In the fuel cell power generating system, the solid oxide substrate may be formed from a zirconia-based ceramic or a ceria-based ceramic, the cathode electrode layer may be formed from a manganite-based ceramic or a cobaltite-based ceramic, and the anode electrode layer may be formed froma cermet of nickel or copper based on a zirconia-based or ceria-based ceramic.

In the fuel cell power generating system, the solid oxide fuel cell may have a plurality of cathode electrode layers on one surface of the solid oxide substrate and a plurality of anode electrode layers on the other surface opposite from the one surface, and a plurality of fuel cells may be formed from the anode electrode layers and the cathode electrode layers formed opposite each other with the solid oxide substrate sandwiched therebetween, wherein the fuel cells are electrically connected in sequence to generate electric power for output.

In the fuel cell power generating system, the fuel cell apparatus may contain at least one fuel cell selected from the group consisting of a solid polymer fuel cell, a molten carbonate fuel cell, and alkaline fuel cell, a phosphoric acid fuel cell, and a solid oxide fuel cell.

As described above, the fuel cell power generating system according to the present invention uses the solid oxide fuel cell that comprises a solid oxide substrate, a cathode electrode layer formed on one surface of the substrate, and an anode electrode layer formed on the other surface of the substrate opposite from the one surface; therefore, if an atmosphere containing fuel and oxygen or an atmosphere containing fuel and steam is available, the solid oxide fuel cell can be readily incorporated into the system and operated to generate electric power.

The power generating system comprising the fuel cell main unit includes the fuel reforming apparatus disposed in the fuel supply system and the exhaust gas treating apparatus disposed in the exhaust gas treating system; as the atmosphere containing fuel and oxygen or the atmosphere containing fuel and steam, suitable for the power generating operation of the solid oxide fuel cell, is present in these fuel supply and exhaust gas treating systems, the amount of power generation per unit fuel consumed can be increased as the power generating system as a whole by installing and operating the solid oxide fuel cell to generate power using these atmospheres.

Further, in the power generating system comprising the fuel cell main unit, the fuel reforming apparatus disposed in the fuel supply system or the exhaust gas treating apparatus disposed in the exhaust gas treating system is provided with a combustion device for heating the atmosphere within the apparatus, and any remaining unconsumed fuel from the fuel cell apparatus is supplied to the combustion device; this serves to enhance the energy utilization efficiency of the system as a whole.

### BRIEF DESCRIPTION OF THE DRAWINGS

Other features, objects and advantages of the present invention will become apparent from the following description of preferred embodiments with reference to the drawings in which like reference characters designate like or corresponding parts throughout several views, and in which:
Figure 1 is a diagram for explaining the basic confirmation of a fuel cell power generating system according to the present invention;
Figures 2A and 2B are diagrams for explaining the construction of a solid oxide fuel cell to be used for each of first and second fuel cell incorporated into the fuel cell power generating system of the present invention;
Figures 3A and 3B are diagrams for explaining a modified example of the construction employed for the first and second fuel cells;
Figure 4 is a diagram for explaining a first comparative example of a fuel cell construction for the first fuel cell incorporated in an exhaust gas treating apparatus;
Figure 5 is a diagram for explaining a second example of the fuel cell construction as an implementation of the present invention which is employed for the first fuel cell incorporated in the exhaust gas treating appartus;
Figure 6 is a diagram for explaining a third comparative example of a fuel cell construction for the second fuel cell incorporated in a fuel reforming apparatus;
Figure 7 is a diagram for explaining a fourth comparative example of a fuel cell construction for the second fuel cell incorporated in the fuel reforming apparatus;
Figure 8 is a diagram for explaining the configuration of a fuel cell power generating system according to the prior art; and
Figure 9 is a diagram for explaining the configuration of a fuel cell power generating system with modifications made for effective utilization of fuel cell exhaust gas.

### DESCRIPTION OF THE PREFERRED EMBODIMENTS

Embodiments of the fuel cell power generating system of the present invention will be described below with reference to the drawings. However, before proceeding to the description of the fuel cell power generating system of the present invention, a fuel cell power generating system proposed in the prior art will be described in order to clarify the features and advantages of the present invention.

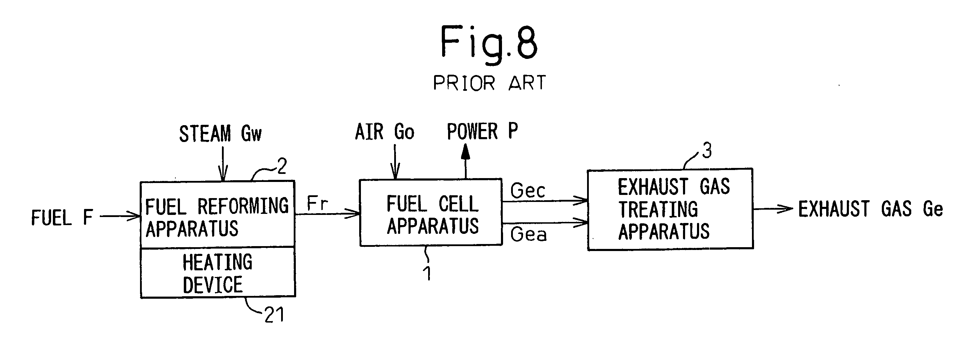

For power generating systems, various types of fuel cells are used, such as solid polymer fuel cells, molten carbonate fuel cells, alkaline fuel cells, and phosphoric acid fuel cells, classified according to how they generate power, and a power generating system is constructed using one type of fuel cell selected from among these fuel cells. Figure 8 shows the configuration of one example of the proposed fuel cell power generating system.

The fuel cell power generating system shown in Figure 8 comprises: a fuel cell apparatus 1 as the fuel cell main unit; a fuel reforming apparatus 2 as one pretreatment in a fuel pretreatment process; and an exhaust gas treating apparatus 3 provided in an exhaust gas treatment process.

When, for example, a solid polymer electrolyte fuel cell is used for the fuel cell apparatus 1, the fuel cell contains a oxidant electrode (cathode electrode) and a fuel electrode (anode electrode) with a solid polymer electrolyte membrane sandwiched therebetween, though the details are not shown in Figure 8. Air Go, for example, is supplied to the cathode electrode through an oxidant supply passage. When the supplied air flows downstream through a prescribed passage where the air contacts the cathode electrode, oxygen contained in the air is consumed in the necessary amount by electrode reaction, thus generates power and producing electric power P for output.

On the other hand, a fuel F is supplied to the fuel cell apparatus 1, but before the fuel is supplied to the anode electrode, pretreatment (refining, reforming, CO removal, etc.) is performed. The power generating system in Figure 8 shows the case where the fuel F is reformed, and the fuel reforming apparatus 2 is provided for this purpose. A gaseous fuel such as natural gas is used as the fuel F. The fuel reforming apparatus 2 is provided with a heating device 21 for heating the fuel reforming atmosphere to which steam Gw is supplied. Here, an electric heater or a raw fuel burner, for example, can be used as the heating device 21. By steam reforming in this atmosphere, the fuel is converted into a hydrogen-rich reformed fuel Fr which is supplied to the anode electrode of the fuel cell apparatus 1.

After the hydrogen in the reformed fuel Fr and the oxygen in the air are respectively consumed in necessary amounts by electrode reaction in the fuel cell apparatus 1, any remaining hydrogen and oxygen are discharged as residual gases, i.e., as an exhaust gas Gec from the cathode electrode side and an exhaust gas Gea from the anode electrode side. The cathode side exhaust gas Gec and the anode side exhaust gas Gea are introduced into the exhaust gas treating apparatus 3 provided on the downstream side of the fuel cell apparatus 1 and, after exhaust gas treatment, the resulting exhaust gas Ge is discharged outside the power generating system.

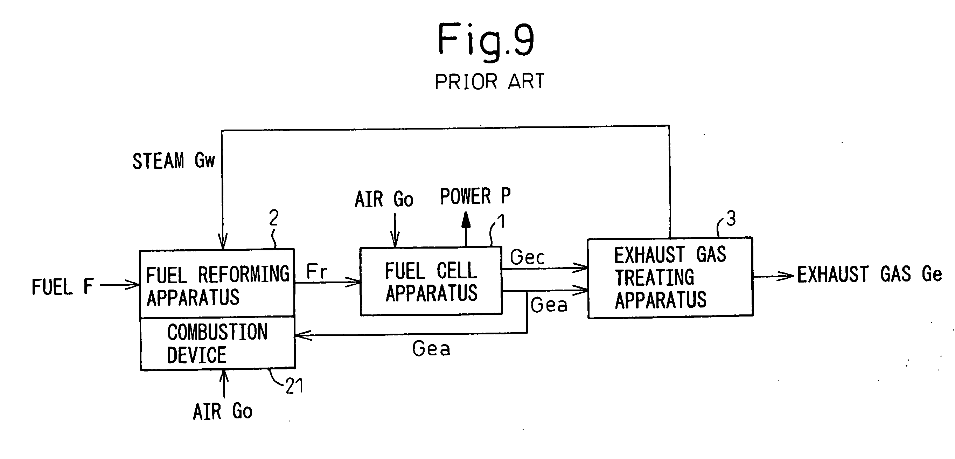

However, in the case of the fuel cell power generating system shown in Figure 8, the energy utilization efficiency as a power generating system is low, and various attempts have been made to improve the energy utilization efficiency. Figure 9 shows one example of the fuel cell power generating system with modifications made to improve the energy utilization efficiency.

The configuration of the fuel cell power generating system shown in Figure 9 is basically the same as that of the fuel cell power generating system shown in Figure 8, but the difference is that the heating device provided in the fuel reforming apparatus in the power generating system of Figure 8 is replaced in the power generating system of Figure 9 by a combustion device 21 that uses a fuel burner. All or part of the anode side gas Gea from the fuel cell apparatus 1 is supplied as a fuel to be combusted in the combustion device 21. To aid the combustion, air Go is also supplied to the combustion device 21. Here, any remaining unconsumed fuel from the fuel cell apparatus 1 is combusted in the combustion device 21 to heat the fuel reforming atmosphere. The reformed fuel Fr produced in the fuel reforming apparatus is thus consumed effectively within the system.

Further, in the fuel cell power generating system shown in Figure 9, the steam Gw generated in the exhaust gas treating apparatus 3, which treats the cathode side exhaust gas Gec and the anode side exhaust gas Gea discharged from the fuel cell apparatus 2, is fed into the fuel reforming atmosphere in the fuel reforming apparatus 2. In the fuel cell power generating system shown in Figure 8, the steam Gw necessary for the fuel reforming in the fuel reforming apparatus was simply generated separately and fed into the fuel reforming atmosphere; by contrast, in the power generating system of Figure 9, the steam generated in the exhaust gas treating apparatus 3 is utilized as the steam Gw necessary for the fuel reforming, thus saving the energy necessary for generating the steam.

However, in the above-described fuel cell power generating systems, the energy utilization is not sufficient when it comes to increasing the amount of power generation of the power generating system; accordingly, in the present invention, a solid oxide fuel cell is placed in an atmosphere containing fuel and oxygen or an atmosphere containing fuel and steam generated during the operation of the fuel cell apparatus provided in the power generating system, and the solid oxide fuel cell is operated to generate power separately from the fuel cell apparatus, thereby increasing the electric power that can be extracted.

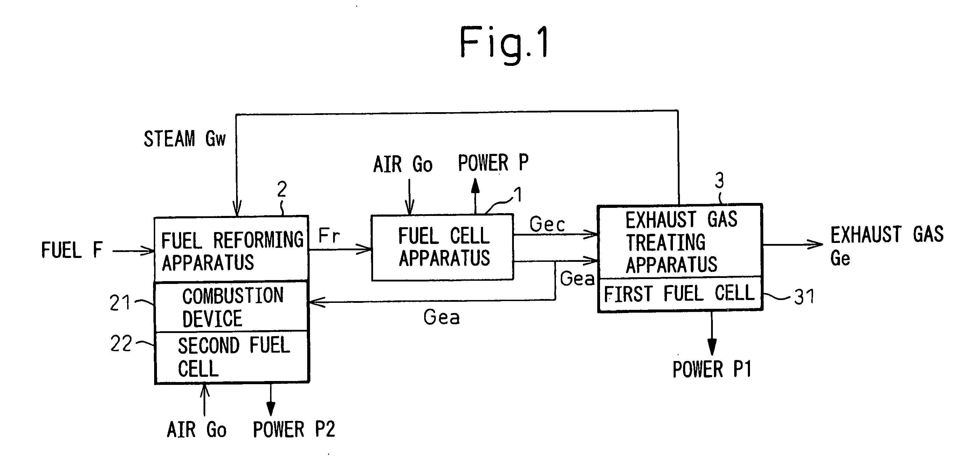

Next, embodiments of the fuel cell power generating system of the present invention will be described with reference to the drawings. Figure 1 shows one configuration example of the fuel cell power generating system of the present invention. The fuel cell power generating system shown is based on the configuration of the fuel cell power generating system shown in Figure 9, and the same component elements are designated by the same reference characters. The component elements that characterize the fuel cell power generating system of the present invention are indicated by thick-lined blocks.

As one such characteristic component element, a first fuel cell 31 is incorporated in the exhaust gas treating apparatus 3 disposed in the exhaust gas system of the fuel cell apparatus. The first fuel cell 31 generates power with the cathode side exhaust gas Gec and the anode side exhaust gas Gea, and outputs electric power P1. As another characteristic component element, a second fuel cell 22 is incorporated in the combustion device 21 which heats the reforming atmosphere in the fuel reforming apparatus 2 disposed in the fuel supply system of the fuel cell apparatus. The second fuel cell 22 generates power with the anode side exhaust gas Gea and air Go or with the reformed fuel Fr and air Go, and outputs electric power P2.

The electric powers P1 and P2 are generated separately from the electric power P that the fuel cell apparatus 1 generates, and the overall output of the power generating system thus increases by an amount equal to the sum of the electric powers P1 and P2. In the fuel cell power generating system shown in Figure 1, the first fuel cell and the second fuel cell are both incorporated into the power generating system, the former in the exhaust gas system and the latter in the fuel supply system, but the fuel cell that characterizes the present invention is incorporated in the exhaust gas system; in that case also, the overall power output can be increased.

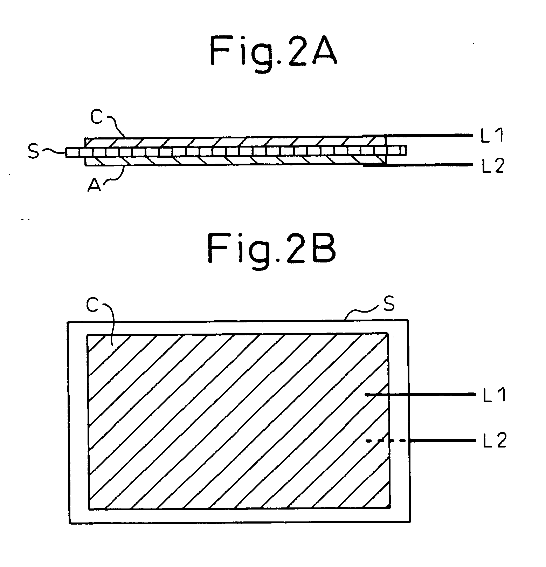

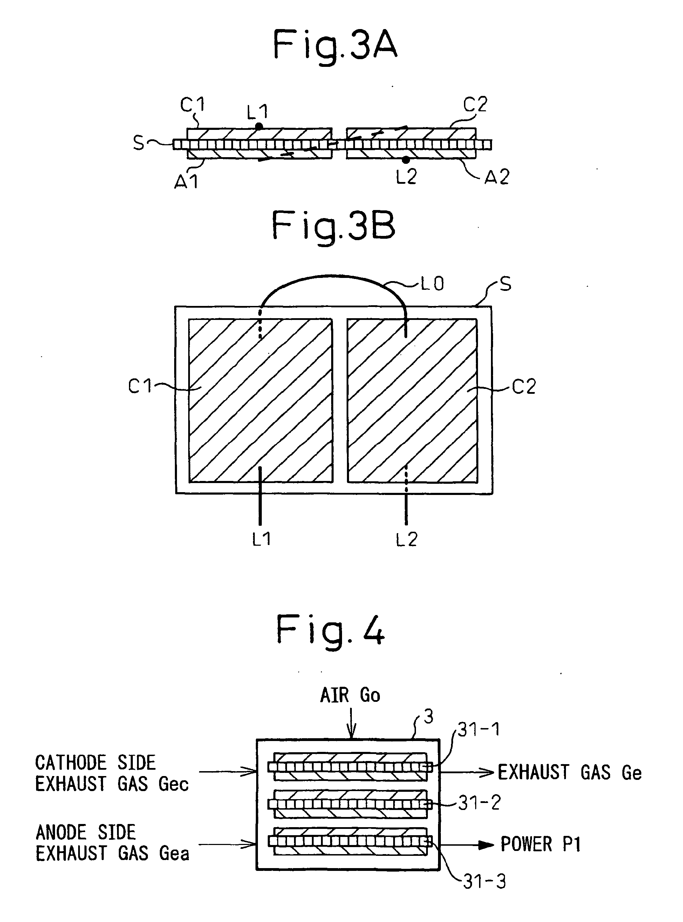

A description will be given of embodiments in which the first fuel cell 31 and the second fuel cell 22 are incorporated into the fuel cell power generating system but, before that, the fuel cell construction suitable for incorporation into each apparatus will be described for the first fuel cell 31 and the second fuel cell 22 with reference to Figures 2A and 2B and Figures 3A and 3B.

Figures 2A and 2B show the basic structure of a solid oxide fuel cell. Figure 2A is a side view schematically showing the structure of the solid oxide fuel cell, and Figure 2B is a top plan view of the same. The solid oxide fuel cell shown in Figures 2A and 2B comprises a solid oxide substrate S, a cathode electrode layer C, and an anode electrode layer A.

The solid oxide substrate S is, for example, a flat rectangular plate, and the cathode electrode layer C and the anode electrode layer A are respectively formed over almost the entire surfaces of the flat solid oxide substrate S in such a manner as to face each other with the solid oxide substrate S interposed therebetween. A lead wire L1 is connected to the cathode electrode layer C and a lead wire L2 to the anode electrode layer A, and the fuel cell output is taken between the lead wires L1 and L2. The solid oxide substrate S need only be formed in a plate-like shape, and need not be limited to the rectangular shape but can take any shape and size suitable for incorporation into the apparatus.

For the solid oxide substrate S, known materials can be used, examples including the following:
a) YSZ (yttria-stablized zirconia), ScSZ (scandia-stabilized zirconia), and zirconia-based ceramics formed by doping these materials with Ce, A1, etc.
b) SDC (samaria-doped ceria), GDC (gadolinium-doped ceria), and other ceria-based ceramics.
c) LSGM (lanthanum gallate) and bismuth oxide-based ceramics.

For the anode electrode layer, known materials can be used, examples including the following:
d) Cermet of nickel and a ceramic based on yttria-stabilized zirconia or scandia-stabilized zirconia or a ceramic based on ceria (SDC, GDC, YDC, etc.).
e) Sintered material composed principally of electrically conductive oxide (50% to 99% by weight) (electrically conductive oxide is, for example, nickel oxide containing lithium in solid solution).
f) Material given in d) or e) to which a metal made of a platinum-group element or its oxide is added in an amount of about 1% to 10% by weight.

Of these materials, d) and e) are particularly preferable.

The sintered material composed principally of electrically conductive oxide given in e) has excellent oxidation resistance, and therefore, can prevent phenomena, resulting from the oxidation of the anode electrode layer, such as delamination of the anode electrode layer from the solid oxide layer and degradation of power generation efficiency or inability to generate power due to the rise in the electrode resistance of the anode electrode layer. For the electrically conductive oxide, nickel oxide containing lithium in solid solution is preferable. It will also be noted that high power generation performance can be obtained by adding a metal made of a platinum-group element or its oxide to the material given in d) or e).

For the cathode electrode layer, known materials, which contain an element, such as lanthanum, selected from group III of the periodic table and doped with strontium (Sr), can be used, examples including a manganic acid compound (for example, lanthanum strontium manganite), a cobalt acid compound (for example, lanthanum strontium cobaltite and samarium strontium cobaltite).

The anode electrode layer and the cathode electrode layer are both formed in a porous structure; preferably, the solid oxide substrate S should also be formed in a porous structure. If the solid oxide substrate was formed in a closely compacted structure, its thermal shock resistance would drop, and the substrate would easily tend to crack when subjected to abrupt temperature changes. Furthermore, as the solid oxide substrate is generally formed thicker than the anode electrode layer and the cathode electrode layer, any crack occurring in the solid oxide substrate would lead to the formation of cracks in the entire structure of the solid oxide fuel cell which would eventually disintegrate in pieces.

When the solid oxide substrate is formed in a porous structure, its thermal shock resistance increases, and defects such as cracking do not occur even when the substrate is placed in or near a flame, during power generation, and subjected to abrupt temperature changes or to a heat cycle involving rapid changes in temperature. Further, when the porous structure was fabricated with a porosity of less than 10%, no appreciable improvement in thermal shock resistance was observed, but when the porosity was 10% or higher, good thermal shock resistance was observed, and a better result was obtained when the porosity was increased to 20% or higher. This is presumably because, when the solid oxide layer is formed in a porous structure, thermal expansion due to heating is absorbed by the pores in the porous structure.

The solid oxide fuel cell is fabricated, for example, in the following manner. First, powders of materials for forming the solid oxide layer are mixed in prescribed proportions, and the mixture is molded into a flat plate-like shape. After that, the flat plate-like structure is calcined and sintered to produce the solid oxide layer which serves as the substrate. Here, by adjusting the kinds and proportions of the powder materials including a pore-forming agent and the calcination conditions such as calcination temperature, calcination time, preliminary calcination, etc., solid oxide layers with various porosities can be produced. A paste is applied in the shape of a cathode electrode layer on one surface of the substrate thus obtained as the solid oxide layer, and a paste is applied in the shape of an anode electrode layer on the other surface thereof; thereafter, the entire structure is calcined to complete the fabrication of two solid oxide fuel cells on a single solid oxide substrate, as shown in Figures 3A and 3B.

The durability of the solid oxide fuel cell can be further increased. In this durability increasing method, a metal mesh is embedded in or fixed to each of the cathode electrode and anode electrode layers of the flat plate fuel cell. In the case of the embedding method, the material (paste) for forming each layer is applied over the solid oxide substrate, and the metal mesh is embedded in the thus applied material, which is then calcined. In the case of the fixing method, the metal mesh is not completely embedded in each layer material but may be fixed on a surface of it, followed by sintering.

For the metal mesh, a material that has excellent heat resistance, and that well matches the thermal expansion coefficient of the cathode electrode layer and anode electrode layer which the metal mesh is to be embedded in or fixed to, is preferred. Specific examples include a platinum metal and a platinum-containing metal alloy formed in the shape of a mesh. Alternatively, stainless steel of SUS 300 series (304, 316, etc.) or SUS 400 series (430, etc.) may be used; these materials being advantageous in terms of cost.

Instead of using the metal mesh, metal wires may be embedded in or fixed to the anode electrode layer and the cathode electrode layer. The metal wires are formed using the same metal material as that used for the metal meshes, and the number of wires and the configuration of the wire arrangement are not limited to any particular number or configuration. The metal meshes or metal wires embedded in or fixed to the anode electrode layer and the cathode electrode layer serve to reinforce the structure so that the solid oxide substrate, if cracked due to its thermal history, etc., will not disintegrate into pieces; furthermore, the metal meshes or the metal wires act to electrically connect cracked portions.

The above description has been given by dealing with the case where the solid oxide substrate is formed in a porous structure, but it will be recognized that the solid oxide substrate of the fuel cell may instead be formed in a closely compacted structure; in that case, the metal meshes or the metal wires embedded in or fixed to the cathode electrode layer and the anode electrode layer provide particularly effective means to cope with the problem of cracking due to thermal history.

The metal meshes or the metal wires may be provided in both the anode electrode layer and the cathode electrode layer or in either one of the layers. Further, the metal meshes and the metal wires may be used in combination. When the metal meshes or the metal wires are embedded at least in the anode electrode layer, then if cracking occurs due to thermal history, the power generation performance of the fuel cell does not degrade and the fuel cell can continue to generate power. As the power generation performance of the solid oxide fuel cell is largely dependent on the effective area of the anode electrode layer as the fuel electrode, the metal meshes or the metal wires should be provided at least in the anode electrode layer.

The construction of the solid oxide fuel cell has been described above; next, a description will be given of the principle of how power is generated using the solid oxide fuel cell.

Oxygen (O₂) is supplied to the cathode electrode layer C of the solid oxide fuel cell. The oxygen is converted into oxygen ions (O²⁻) at the boundary between the cathode electrode layer C and the solid oxide substrate S, and the oxygen ions (O²⁻) are conducted through the solid oxide substrate S into the anode electrode layer A. The oxygen ions (O²⁻) conducted into the anode electrode layer A react, for example, with a methane gas (CH₄) supplied to the anode electrode layer A, producing water (H₂O), carbon dioxide (CO₂), hydrogen (H₂), and carbon monoxide (CO). In this reaction process, the oxygen ions release electrons, and a potential difference therefore occurs between the cathode electrode layer C and the anode electrode layer A. Accordingly, the output power of the fuel cell can be taken between the lead wires L1 and L2 electrically connected to the cathode electrode layer C and the anode electrode layer A.

Thus, when the solid oxide fuel cell with the cathode electrode layer C and the anode electrode layer A formed on opposite surfaces of the solid oxide substrate as described above is placed in a mixed fuel gas atmosphere containing methane gas and oxygen, an electromotive force is generated between the cathode electrode layer C and the anode electrode layer A, and the output power of the fuel cell can be taken out via the lead wires L1 and L2.

In one mode of use of the above-described solid oxide fuel cell, power can be generated by exposing the anode electrode layer formed on the outside surface of the solid oxide substrate directly to a flame. In this solid oxide fuel cell, the solid oxide substrate is formed in a plate-like shape - for example, a thin plate-like structure is employed for the solid oxide substrate S - and the cathode electrode layer C is formed on one surface of the solid oxide substrate S and the anode electrode layer A on the opposite surface thereof; accordingly, air and fuel can be supplied separately to the cathode electrode layer C, i.e., the air electrode, and the anode electrode layer A, i.e., the fuel electrode, and thus an oxygen-rich condition at the cathode electrode layer side and a fuel-rich condition at the anode electrode layer side can be easily created.

Here, the flame for the power generation of the fuel cell is applied over the entire surface of the anode electrode layer A, the flame being produced by the combustion of the supplied fuel. For example, methane or the like, in the case of a gaseous fuel, or methanol or the like, in the case of a liquid fuel, can be supplied as the fuel for producing the flame. On the other hand, air is supplied to the cathode electrode layer C.

In the solid oxide fuel cell shown in Figures 2A and 2B, the cathode electrode layer C and the anode electrode layer A on opposite surfaces of the solid oxide substrate S are respectively formed as single layers extending over the respective surfaces of the substrate, to construct a single fuel cell; alternatively, as shown in Figures 3A and 3B, a plurality of cathode electrode layers and a plurality of anode electrode layers may respectively be formed on the respective surfaces of the flat plate solid oxide substrate S, to construct a plurality of fuel cells as a whole.

In Figure 3A, two cathode electrode layers C1 and C2 are formed on one surface of the substrate S and two anode electrode layers A1 and A2 on the opposite surface thereof. The cathode electrode layer C1 and the anode electrode layer A1 form one fuel cell, and the cathode electrode layer C2 and the anode electrode layer A2 form the other fuel cell. Here, an electromotive force extracting lead wire L1 is attached to the cathode electrode layer C1, and likewise, an electromotive force extracting lead wire L2 is attached to the anode electrode layer A2. Further, as shown in Figure 3B, the cathode electrode layer C2 and the anode electrode layer A1 are electrically connected by a connecting wire L0. The lead wires and the connecting wire are formed from a heat-resistant platinum material or a platinum-containing alloy.

When a fuel such as a methane gas is burned to produce a flame under the two solid oxide fuel cells, the entire surfaces of the anode electrode layers A1 and A2 are exposed to the flame. As the two fuel cells are connected in series by the connecting wire L0, an output equal to the sum of the electromotive forces produced by the two fuel cells is obtained between the lead wires L1 and L2.

As the anode electrode layers A1 and A2 of the thus constructed fuel cells are formed in a flat plate-like shape, the flame can be uniformly applied to them, compared with the tubular type structure. Further, the anode electrode layers A1 and A2 are disposed facing the flame side so that hydrocarbons, hydrogen, radicals (OH, CH, C₂, O₂H, CH₃), etc. present in the flame can be easily used as the fuel.

Further, the flat plate structure has the effect of being able to shield the cathode electrode layers C1 and C2 from the flame; as a result, with the anode electrode layers A1 and A2 disposed facing the flame side, the cathode electrode layers C1 and C2 can be exposed to the air. In the open-type fuel-cell device comprising the two fuel cells, this makes it easier for the cathode electrode layers C1 and C2 to use the oxygen in the air, and the oxygen-rich condition can thus be maintained. In this case, an oxygen-containing gas (air, oxygen-rich gas, etc.) may be fed to the cathode electrode layers C1 and C2 in order to enhance the oxygen utilization efficiency of the cathode electrode layers C1 and C2.

Any fuel that burns and is oxidized by forming a flame (a flammable fuel) can be used as the fuel for combustion. Phosphorous, sulfur, fluorine, chlorine, or their compounds may be used, but an organic substance is preferable. Such organic fuels include, for example, gases such as methane, ethane, propane, and butane, gasoline-based liquids such as hexane, heptane, octane, alcohols such as methanol, ethanol, and propanol, ketone such as acetone, and various other organic solvents, edible oil, kerosene, etc. Of these fuels, a gaseous fuel is particularly preferable.

Further, the flame may be a diffusion flame or a premixed flame, but the premixed flame is preferred for use, because the diffusion flame is unstable and tends to incur degradation of the performance of the anode electrode layers due to the production of soot. The premixed flame is advantageous because the premixed flame is not only stable but the flame size is easily adjustable; in addition, the production of soot can be prevented by adjusting the fuel density.

In this way, a solid oxide fuel-cell device can be fabricated that comprises a plurality of fuel cells formed on a single solid oxide substrate, and that can receive flames on the anode electrode layers formed on the same surface, while air is supplied to the cathode electrode layer side separately from the flames. In the solid oxide fuel-cell device shown in Figures 3A and 3B, the connecting wire L0 is routed outside the solid oxide substrate S to connect between the cathode electrode layer C2 and the anode electrode layer A1 in order to connect the two fuel cells in series. In certain applications, this connecting wire L0 may become an obstruction because it protrudes outside the solid oxide substrate. To avoid this, a via may be formed in a portion of the solid oxide substrate S where neither the cathode electrode layer nor the anode electrode layer is formed, and the cathode electrode layer and the anode electrode layer may be connected together through this via.

The above has described that the solid oxide fuel cell comprising a solid oxide substrate, the cathode electrode layer formed on one surface of the solid oxide substrate, and an anode electrode layer formed on the other surface of the substrate opposite from the one surface is the fuel cell that can generate power in an atmosphere containing fuel and oxygen or in an atmosphere containing fuel and steam and that is suitable for incorporation as the first fuel cell 31 as well as the above-described solid oxide fuel cell can also be employed for the fuel cell apparatus itself in the fuel cell power generating system shown in Figure 1.

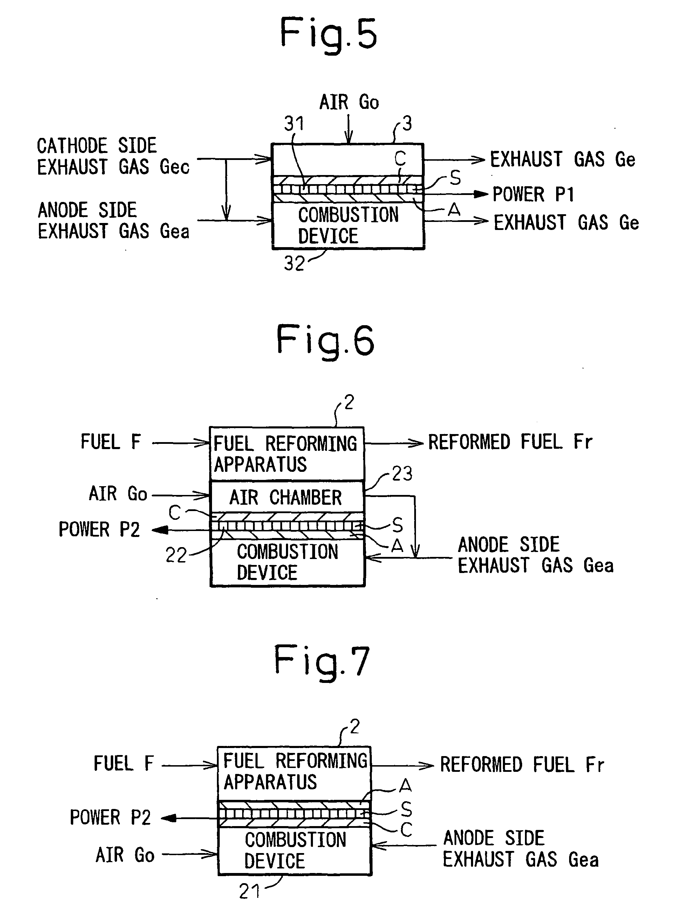

Next, specific examples of how the above solid oxide fuel cell can be incorporated as the first fuel cell 31 or the second fuel cell 22 will be described with reference to Figures 4 to 7. Example 2 with reference to Figure 5 describes an implementation of an embodiment of the present invention. The first comparative example and the second example implementing the present invention concern the case in which the solid oxide fuel cell is incorporated in the exhaust gas treating system of the fuel cell apparatus, and the third and fourth comparative examples concern the case in which the solid oxide fuel cell is incorporated in the fuel supply system of the fuel cell apparatus.

### <Comparative Example 1>

The first comparative example concerns the case in which the first fuel cell 31 is installed inside the exhaust gas treating apparatus 3 disposed in the exhaust gas treating system of the fuel cell apparatus 1; that is, the first fuel cell 31 is contained in the exhaust gas treating apparatus 3, and the first fuel cell itself is placed in a mixture gas atmosphere containing the cathode side exhaust gas Gec and the anode side exhaust gas Gea discharged from the fuel cell apparatus 1. Figure 4 shows how this first fuel cell 31 is arranged.

Figure 4 mainly shows the construction of the exhaust gas treating apparatus 3 in the fuel cell power generating system shown in Figure 1, and the same parts as those in Figure 1 are designated by the same reference characters. In Figure 4, the solid oxide fuel cell constructed by forming the cathode electrode layer and the anode electrode layer on opposite surfaces of the solid oxide substrate, as described above, is employed as the first fuel cell 31; here, the first fuel cell 31 is actually three solid oxide fuel cells 31-1 to 31-3 arranged in parallel to each other in the mixture gas atmosphere. In the exhaust gas treating apparatus 3, as the mixture gas atmosphere is usually heated and held at a temperature suitable for exhaust gas treatment, the mixture gas atmosphere provides an environment suitable for the power generation of the solid oxide fuel cell.

The number of solid oxide fuel cells to be installed inside the exhaust gas treating apparatus is not limited to 3, but one or more than one fuel cell can be suitably selected as desired. Further, depending on how the lead wires L1 and L2 attached to the respective solid oxide fuel cells are connected, the plurality of fuel cells can be connected in a series or a parallel array or in a series-parallel array; in this way, the output voltage value or the output current value of the electric power P1 can be changed.

Each solid oxide fuel cell generates power by the electrode reaction between the oxygen contained in the cathode side exhaust gas Gec discharged from the fuel cell apparatus 1 and the hydrogen contained in the anode side exhaust gas Gea likewise discharged, and produces electric power P1 for output. Here, each solid oxide fuel cell uses the anode side exhaust gas Gea as the fuel for power generation. If necessary, air Go may be supplied to the exhaust gas treating apparatus 3 to supplement the oxygen. Any residual hydrogen not consumed by each solid oxide fuel cell is treated inside the exhaust gas treating apparatus 3, and discharged as the exhaust gas Ge outside the system.

In the prior art fuel cell power generating system of Figures 8 and 9, the residual fuel contained in the exhaust gas discharged from the fuel cell apparatus 1, and not consumed for power generation, is discarded after being treated in the exhaust gas treating apparatus; on the other hand, according to the first comparative example described above, as the residual fuel is effectively utilized for power generation by the solid oxide fuel cells in the exhaust gas treating apparatus, the amount of power generation per unit fuel consumed can be increased as the power generating system as a whole.

### <Example 2 as an implementation of the present invention>

The second example also concerns the case in which the first fuel cell 31 is installed inside the exhaust gas treating apparatus 3 disposed in the exhaust gas treating system of the fuel cell apparatus 1, that is, the first fuel cell 31 is contained in the exhaust gas treating apparatus 3, as in the first comparative example, but the difference is that, in the second example as an implementation of the present invention, the first fuel cell itself is not placed in the mixture gas atmosphere containing the cathode side exhaust gas Gec and the anode side exhaust gas Gea discharged from the fuel cell apparatus 1, but is placed so that the cathode side exhaust gas Gec and the anode side exhaust gas Gea are supplied separately to the cathode electrode layer side and the anode electrode layer side of the solid oxide fuel cell mounted as the first fuel cell. Figure 5 shows how this first fuel cell 31 is arranged.

Figure 5 mainly shows the construction of the exhaust gas treating apparatus 3 in the fuel cell power generating system shown in Figure 1, and the same parts as those in Figure 1 are designated by the same reference characters. In Figure 5 also, the solid oxide fuel cell constructed by forming the cathode electrode layer C and the anode electrode layer A on opposite surfaces of the solid oxide substrate S, as described above, is employed as the first fuel cell 31.

The solid oxide fuel cell 31 is suitably mounted within the exhaust gas treating apparatus 3 in the position where the cathode side exhaust gas Gec and the anode side exhaust gas Gea from the fuel cell apparatus are introduced. The cathode side exhaust gas Gec is supplied to the cathode electrode layer C side of the solid oxide fuel cell 31, while the anode side exhaust gas Gea and part of the cathode side exhaust gas Gec are supplied to the anode electrode layer A side thereof. If necessary, air Go may be supplied to the exhaust gas treating apparatus 3 to supplement the oxygen.

The solid oxide fuel cell 31 is placed with its anode electrode layer A facing a combustion device 32 having a burner for burning the fuel. The combustion device 32 produces a flame by burning the anode side exhaust gas Gea and part of the cathode side exhaust gas Gec discharged from the fuel cell apparatus 1. The entire surface of the anode electrode layer A is exposed to this flame. Using the active species contained in this flame as fuel, the solid oxide fuel cell 31 generates power by the electrode reaction between the fuel and the oxygen contained in the cathode side exhaust gas Gec, and produces electric power P1 for output.

The combustion device 32 need not be provide3d specifically, but use can be made of the combustion device originally provided in the exhaust gas treating apparatus 3 to heat the exhaust gas treating atmosphere, and the anode side exhaust gas Gec and part of the cathode side exhaust gas Gec can then be supplied to this combustion device. Any residual fuel not consumed by the solid oxide fuel cell 31 is treated inside the exhaust gas treating apparatus 3, and discharged as the exhaust gas Ge outside the system.

In the prior art fuel cell power generating system of Figures 8 and 9, the residual fuel contained in the exhaust gas discharged from the fuel cell apparatus 1, and not consumed for power generation, is discarded after being treated in the exhaust gas treating apparatus; on the other hand, according to the second example as an implementation of the present invention described above, as the residual fuel is effectively utilized for power generation by the solid oxide fuel cell in the exhaust gas treating apparatus, the amount of power generation per unit fuel consumed can be increased as the power generating system as a whole.

### <Comparative Example 3>

The third comparative example concerns the case in which the second fuel cell 22 is installed inside the fuel reforming apparatus 2 disposed in the fuel supply system of the fuel cell apparatus 1; that it, the second fuel cell 22 is contained in the fuel reforming apparatus 2, and the second fuel cell itself is incorporated in the combustion device which is originally provided in the fuel reforming apparatus to heat the fuel reforming atmosphere. Figure 6 shows how this second fuel cell 22 is arranged.

Figure 6 mainly shows the construction of the fuel reforming apparatus 2 in the fuel cell power generating system shown in Figure 1, and the same parts as those in Figure 1 are designated by the same reference characters. In Figure 6, the solid oxide fuel cell constructed by forming the cathode electrode layer and the anode electrode layer on opposite surfaces of the solid oxide substrate, as described above, is employed as the second fuel cell 22. In the third comparative example, since the flame produced by the combustion device 21 in the fuel reforming apparatus 2 is used as the power generation fuel for the solid oxide fuel cell, an air chamber to which air Go is supplied is provided in order to keep the cathode electrode layer side in an oxygen-rich condition. The fuel reforming atmosphere is heated via this air chamber.

All or part of the anode side exhaust gas Gea from the fuel cell apparatus 1 is supplied to the combustion device 21, and further, air for combusting the anode side exhaust gas Gea is supplied via the air chamber 23. The solid oxide fuel cell 22 generates power by the electrode reaction between the oxygen contained in the air Go supplied to the cathode electrode layer C and the active species contained in the flame applied over the entire surface of the anode electrode layer A, and produces electric power P2 for output.

In the prior art fuel cell power generating system of Figures 8 and 9, the residual fuel contained in the exhaust gas discharged from the fuel cell apparatus 1, and not consumed for power generation, is discarded after being treated in the exhaust gas treating apparatus; on the other hand, according to the third comparative example described above, as the residual fuel is effectively utilized for power generation and heating by the solid oxide fuel cell in the fuel reforming apparatus, the amount of power generation per unit fuel consumed can be increased as the power generating system as a whole.

### <Comparative Example 4>

The fourth comparative example also concerns the case in which the second fuel cell 22 is installed inside the fuel reforming apparatus 2 disposed in the fuel supply system of the fuel cell apparatus 1; that is, as in the third comparative example, the second fuel cell 22 is contained in the fuel reforming apparatus 2, the second fuel cell itself is incorporated in the combustion device which is originally provided in the fuel reforming apparatus to heat the fuel reforming atmosphere, and the anode side exhaust gas Gea discharged from the fuel cell apparatus 1 is used for the combustion device to heat the fuel reforming atmosphere, but the difference is that, in the fourth comparative example, the fuel for the second fuel cell is supplied from the fuel reforming atmosphere. Figure 7 shows how this second fuel cell 22 is arranged.

Figure 7 mainly shows the construction of the fuel reforming apparatus 2 in the fuel cell power generating system shown in Figure 1, and the same parts as those in Figure 1 are designated by the same reference characters. In Figure 7, the solid oxide fuel cell constructed by forming the cathode electrode layer and the anode electrode layer on opposite surfaces of the solid oxide substrate, as described above, is employed as the second fuel cell 22. In the fourth comparative example, the solid oxide fuel cell 22 is placed with its anode electrode layer A facing the fuel reforming atmosphere side and contacting that atmosphere so that the fuel is supplied from the fuel reforming atmosphere in the fuel reforming apparatus 2.

As the solid oxide fuel cell 22 is placed with its anode electrode layer A facing the fuel reforming atmosphere side, the cathode electrode layer C necessarily faces the combustion device 21. Therefore, air Go is supplied to the combustion device 21 not only to aid the combustion of all or part of the anode side exhaust gas Gea supplied from the fuel cell apparatus 1, but also to keep the cathode electrode layer C side in an oxygen-rich condition. Not only the anode side exhaust gas Gea but other kind of gas can also be supplied as fuel to the combustion device 21.

The solid oxide fuel cell 22 generates power by the electrode reaction between the oxygen contained in the air Go supplied to the cathode electrode layer C and the active species contained in the reformed fuel generated in the fuel reforming atmosphere contacting the entire surface of the anode electrode layer A, and produces electric power P2 for output.

In the prior art fuel cell power generating system of Figures 8 and 9, the residual fuel contained in the exhaust gas discharged from the fuel cell apparatus 1, and not consumed for power generation, is discarded after being treated in the exhaust gas treating apparatus; on the other hand, according to the fourth comparative example described above, as the residual fuel from the fuel cell apparatus is used as the fuel to be combusted by the combustion device provided in the fuel reforming apparatus and is thus effectively utilized for heating, the amount of power generation per unit fuel consumed can be increased as the power generating system as a whole.

## Claims

1. A fuel cell power generating system comprising:
a fuel cell apparatus (1) having a fuel supply system and an exhaust gas treating system;
an exhaust gas treating apparatus (3) disposed in said exhaust gas system;
a solid oxide fuel cell (31) installed in said exhaust gas treating apparatus, having a solid oxide substrate (S) , a cathode electrode layer (C) formed on one surface of said substrate, and an anode electrode layer (A) formed on the other surface of said substrate opposite from said one surface, wherein said exhaust gas discharged from said fuel cell apparatus is supplied as a power generation fuel to said solid oxide fuel cell,
**characterised in that**, in said exhaust gas treating apparatus (3), a cathode side exhaust gas (Gec)discharged from said fuel cell apparatus (1) is supplied to said cathode electrode layer (C), and an anode side exhaust gas (Gea) discharged from said fuel cell apparatus (1) and part of said cathode side exhaust gas (Gec) are supplied to said anode electrode layer (A), and
said anode electrode layer (A) is exposed to a premixed flame produced by said anode side exhaust gas (Gea) and said cathode side exhaust gas (Gec).

2. A fuel cell power generating system as claimed in claim 1, wherein air (GO) is supplied to said cathode electrode layer (C) of said solid oxide fuel cell (31).

3. A fuel cell power generating system as claimed in claim 2, wherein
a mixture gas of said cathode side exhaust gas (Gec) and said anode side exhaust gas (Gea) discharged from said fuel cell apparatus is supplied to said anode electrode layer (A) of said solid oxide fuel cell (31), and wherein
said anode electrode layer (A) is exposed to a premixed flame produced by said mixture gas.

4. A fuel cell power generating system as claimed in claim 1 or claim 2, wherein
a fuel pretreating apparatus for pretreating a fuel by heating of a combustion device (32) before supplying said fuel to said fuel cell apparatus (1) is disposed in said fuel supply system, and
said solid oxide fuel cell (31) is mounted within said combustion device in said fuel pretreating apparatus.

5. A fuel cell power generating system as claimed in claim 4, wherein
air (Go) is supplied to said cathode electrode layer of said solid oxide fuel cell (31), and
a flame produced by said combustion device (32) is supplied to said anode electrode layer (A) of said solid oxide fuel cell.

6. A fuel cell power generating system as claimed in claim 5, wherein an anode side exhaust gas (Gea) discharged from said fuel cell apparatus (1) is supplied to said combustion device (32).

7. A fuel cell power generating system as claimed in claim 4, wherein
said solid oxide fuel cell (1) is placed with said cathode electrode layer (C) facing said combustion device so that said cathode electrode layer is exposed to a flame produced by said combustion device, and
said anode electrode layer of said solid oxide fuel cell is exposed to a pretreating atmosphere in said fuel pretreating apparatus.

8. A fuel cell power generating system as claimed in claim 7, wherein air (Go) and an anode side exhaust gas (Gea) discharged from said fuel cell apparatus (1) are supplied to said combustion device.

9. A fuel cell power generating system as claimed in any one of the preceding claims, wherein
said solid oxide substrate (S) is formed from a zirconia-based ceramic or a ceria-based ceramic,
said cathod electrode layer (C) is formed from a manganite-based ceramic or a cobaltite-based ceramic, and
said anode electrode layer (A) is formed from a cermet of nickel or copper based on a zirconia-based or ceria-based ceramic.

10. A fuel cell power generating system as claimed in any one of the preceding claims, wherein said solid oxide fuel cell (31) has a plurality of cathode electrode layers (C) on one surface of said solid oxide substrate (S) and a plurality of anode electrode layers (A) on the other surface opposite from one surface, and a plurality of fuel cells are formed from said anode electrode layers and said cathode electrode layers formed opposite each other with said solid oxide substrate sandwiched therebetween, wherein said fuel cells are electrically connected in sequence to generate electric power for output.

11. A fuel cell power generating system as claimed in any one of the preceding claims, wherein said fuel cell apparatus contains at least one fuel cell selected from the group consisting of a solid polymer fuel cell, a molten carbonate fuel cell, an alkaline fuel cell, a phosphoric acid fuel cell, and a solid oxide fuel cell.

## Patentansprüche

1. Stromerzeugungssystem mit Brennstoffzellen, aufweisend:
eine Brennstoffzellenvorrichtung (1) mit einem Brennstoffzufuhrsystem und einem Abgasaufbereitungssystem;
eine Abgasaufbereitungsvorrichtung (3), die im Abgassystem angeordnet ist;
eine Festoxid-Brennstoffzelle (31), die in der Abgasaufbereitungsvorrichtung installiert ist, mit einem Festoxid-Substrat (S), einer Katodenelektrodenschicht (C), die auf einer Oberfläche des Substrats ausgebildet ist, und einer Anodenelektrodenschicht (A), die auf der anderen Oberfläche des Substrats gegenüber der einen Oberfläche ausgebildet ist, wobei das aus der Brennstoffzellenvorrichtung geförderte Abgas als Stromerzeugungsbrennstoff zur Festoxid-Brennstoffzelle geliefert wird,
**dadurch gekennzeichnet, dass** in der Abgasaufbereitungsvorrichtung (3) ein katodenseitiges Abgas (Gec), das von der Brennstoffzellenvorrichtung (1) gefördert wird, an die Katodenelektrodenschicht (C) und ein anodenseitiges Abgas (Gea), das von der Brennstoffzellenvorrichtung (1) gefördert wird, sowie ein Teil des katodenseitigen Abgases (Gec) an die Anodenelektrodenschicht (A) geliefert werden, und
die Anodenelektrodenschicht (A) einer vorgemischten Flamme ausgesetzt ist, die vom anodenseitigen Abgas (Gea) und vom katodenseitigen Abgas (Gec) erzeugt wird.

2. Stromerzeugungssystem mit Brennstoffzellen nach Anspruch 1, bei dem Luft (Go) an die Katodenelektrodenschicht (C) der Festoxid-Brennstoffzelle (31) geliefert wird.

3. Stromerzeugungssystem mit Brennstoffzellen nach Anspruch 2, bei dem
ein Gasgemisch aus dem katodenseitigen Abgas (Gec) und dem anodenseitigen Abgas (Gea), die von der Brennstoffzellenvorrichtung gefördert werden, an die Anodenelektrodenschicht (A) der Festoxid-Brennstoffzelle (31) geliefert wird, und bei dem die Anodenelektrodenschicht (A) einer von diesem Gasgemisch erzeugten vorgemischten Flamme ausgesetzt ist.

4. Stromerzeugungssystem mit Brennstoffzellen nach Anspruch 1 oder 2, bei dem
eine Brennstoff-Voraufbereitungsvorrichtung zum Voraufbereiten eines Brennstoffs durch Erwärmen eines Verbrennungsgeräts (32) vor der Zufuhr des Brennstoffs zur Brennstoffzellenvorrichtung (1) im Brennstoffzufuhrsystem angeordnet ist, und
die Festoxid-Brennstoffzelle (31) im Innern des Verbrennungsgeräts in der Brennstoff-Voraufbereitungsvorrichtung angeordnet ist.

5. Stromerzeugungssystem mit Brennstoffzellen nach Anspruch 4, bei dem Luft (Go) an die Katodenelektrodenschicht der Festoxid-Brennstoffzelle (31) geliefert wird, und
eine vom Verbrennungsgerät (32) erzeugte Flamme an die Anodenelektrodenschicht (A) der Festoxid-Brennstoffzelle (31) gebracht wird.

6. Stromerzeugungssystem mit Brennstoffzellen nach Anspruch 5, bei dem ein anodenseitiges Abgas (Gea), das von der Brennstoffzellenvorrichtung (1) gefördert wird, an das Verbrennungsgerät (32) geliefert wird.

7. Stromerzeugungssystem mit Brennstoffzellen nach Anspruch 4, bei dem
die Festoxid-Brennstoffzelle (31) mit der Katodenelektrodenschicht (C) so angeordnet ist, dass sie zum Verbrennungsgerät weist, so dass die Katodenelektrodenschicht einer vom Verbrennungsgerät erzeugten Flamme ausgesetzt ist, und
die Anodenelektrodenschicht der Festoxid-Brennstoffzelle einer Voraufbereitungsatmosphäre in der Brennstoff-Voraufbereitungsvorrichtung ausgesetzt ist.

8. Stromerzeugungssystem mit Brennstoffzellen nach Anspruch 7, bei dem Luft (Go) und ein anodenseitiges Abgas (Gea), die von der Brennstoffzellenvorrichtung (1) gefördert werden, an das Verbrennungsgerät geliefert werden.

9. Stromerzeugungssystem mit Brennstoffzellen nach einem der vorigen Ansprüche, bei dem
das Festoxid-Substrat (S) aus einem keramischen Material auf Zirkonium(IV)-Oxidbasis oder auf Zer(IV)-Oxidbasis besteht,
wobei die Katodenelektrodenschicht (C) aus einem keramischen Material auf Mangan(IV)-Oxidbasis oder Cobalt(IV)-Oxidbasis besteht, und
die Anodenelektrodenschicht (A) aus einem Cermet auf Nickel- oder Kupferbasis auf einem Keramikmaterial auf Zirkonium(IV)-Oxidbasis oder Zer(IV)-Oxixdbasis ausgebildet ist.

10. Stromerzeugungssystem mit Brennstoffzellen nach einem der vorigen Ansprüche, bei dem die Festoxid-Brennstoffzelle (31) eine Mehrzahl Katodenelektrodenschichten (C) auf einer Oberfläche des Festoxid-Substrats (S) und eine Mehrzahl Anodenelektrodenschichten (A) auf der anderen der einen Oberfläche gegenüberliegenden Oberfläche hat, und eine Mehrzahl Brennstoffzellen aus den einander gegenüberliegend gebildeten Anodenelektrodenschichten und Katodenelektrodenschichten gebildet ist, wobei das Festoxid-Substrat sandwichartig dazwischen angeordnet ist, und die Brennstoffzellen elektrisch in Reihe geschaltet sind, um elektrischen Strom zu erzeugen und abzugeben.

11. Stromerzeugungssystem mit Brennstoffzellen nach einem der vorigen Ansprüche, bei dem die Brennstoffzellenvorrichtung mindestens eine Brennstoffzelle enthält, die aus der Gruppe bestehend aus einer Festpolymer-Brennstoffzelle, einer Schmelzkarbonat-Brennstoffzelle, einer Alkali-Brennstoffzelle und einer Festoxid-Brennstoffzelle gewählt wird.

## Revendications

1. Système de génération d'électricité à pile à combustible, comprenant:
un appareil (1) à pile à combustible possédant un système d'alimentation en combustible et un système de traitement du gaz d'échappement;
un appareil (3) de traitement du gaz d'échappement disposé dans ledit système pour gaz d'échappement;
une pile à combustible (31) à oxyde solide installée dans ledit appareil de traitement du gaz d'échappement, possédant un substrat (S) en oxyde solide, une couche (C) d'électrode cathodique formée sur une face dudit substrat, et une couche (A) d'électrode anodique formée sur la surface externe dudit substrat opposée à ladite première surface, dans laquelle ledit gaz d'échappement délivré par ledit appareil à pile à combustible est fourni comme combustible de production d'énergie à ladite pile à combustible à oxyde solide,
**caractérisé en ce que**, dans ledit appareil (3) de traitement du gaz d'échappement, un gaz d'échappement de côté cathode (Gec) délivré par ledit appareil (1) à pile à combustible (1) est fourni à ladite couche d'électrode cathodique (C), et un gaz d'échappement de côté anode (Gea) délivré par ladite appareil (1) à pile à combustible et une partie dudit gaz d'échappement de côté cathode (Gec) sont fournis à ladite couche d'électrode anodique (A), et
ladite couche d'électrode anodique (A) est exposée à une flamme de prémélange produite par ledit gaz d'échappement côté anode (Gea) et ledit gaz d'échappement côté cathode (Gec).

2. Système de génération d'électricité à pile à combustible selon la revendication 1, dans lequel de l'air (GO) est fourni à ladite couche d'électrode cathodique (C) de ladite pile à combustible (31) à oxyde solide.

3. Système de génération d'électricité à pile à combustible selon la revendication 2, dans lequel
un mélange gazeux dudit gaz d'échappement côté cathode (Gec) et dudit gaz d'échappement côté anode (Gea) délivré par ledit appareil à pile à combustible est fourni à la couche d'électrode anodique (A) de ladite pile à combustible (31) à oxyde solide, et dans lequel
ladite couche d'électrode anodique (A) est exposée à une flamme de prémélange produite par ledit mélange gazeux.

4. Système de génération d'électricité à pile à combustible selon la revendication 1 ou la revendication 2, dans lequel
un appareil de pré-traitement de combustible, pour pré-traiter un combustible par chauffage d'un dispositif de combustion (32) avant d'amener ledit combustible audit appareil (1) à pile à combustible, est disposé dans ledit système d'alimentation en combustible, et
ladite pile à combustible (31) à oxyde solide est montée dans ledit dispositif de combustion dans ledit appareil de pré-traitement du combustible.

5. Système de génération d'électricité à pile à combustible selon la revendication 4, dans lequel
de l'air (Go) est fourni à la couche d'électrode cathodique (C) de ladite pile à combustible (31) à oxyde solide, et
une flamme produite par ledit dispositif de combustion (32) est fournie à ladite couche d'électrode anodique (A) de ladite pile à combustible à oxyde solide.

6. Système de génération d'électricité à pile à combustible selon la revendication 5, dans lequel un gaz d'échappement de côté anode (Gea) délivré par l'appareil (1) à pile à combustible est fourni audit dispositif de combustion (32).

7. Système de génération d'électricité à pile à combustible selon la revendication 4, dans lequel
ladite pile à combustible (1) à oxyde solide est placée avec ladite couche d'électrode cathodique (C) face audit dispositif de combustion, de telle sorte que ladite couche d'électrode cathodique est exposée à une flamme produite par ledit dispositif de combustion, et
ladite couche d'électrode anodique (A) de ladite pile à combustible à oxyde solide est exposée à une atmosphère de pré-traitement dans ledit appareil de pré-traitement de combustible.

8. Système de génération d'électricité à pile à combustible selon la revendication 7, dans lequel de l'air (Go) et un gaz d'échappement de côté anode (Gea) déchargé par l'appareil (1) à pile à combustible sont fournis audit dispositif de combustion.

9. Système de génération d'électricité à pile à combustible selon l'une quelconque des revendications précédentes, dans lequel
ledit substrat (S) d'oxyde solide est formé d'une céramique à la zircone ou d'une céramique à l'oxyde de cérium,
ladite couche d'électrode cathodique (C) est formée d'une céramique à la manganite ou d'une céramique à la cobaltite, et
ladite couche d'électrode anodique (A) est formée à partir d'un cermet de nickel ou de cuivre basé sur une céramique à la zircone ou à l'oxyde de cérium

10. Système de génération d'électricité à pile à combustible selon l'une quelconque des revendications précédentes, dans lequel ladite pile à combustible (31) à oxyde solide possède plusieurs couches d'électrode cathodique (C) sur une surface du substrat (S) d'oxyde solide, et plusieurs couches d'électrode anodiques (A) sur l'autre surface, opposée à la première surface, et plusieurs piles à combustible sont formées à partir desdites couches d'électrodes anodiques et desdites couches d'électrodes cathodiques formées à l'opposé les unes des autres, ledit substrat à oxyde solide étant intercalé entre elles, lesdites piles à combustible étant reliées électriquement en série pour générer de l'énergie électrique à la sortie.

11. Système de génération d'électricité à pile à combustible selon l'une quelconque des revendications précédentes, dans lequel ledit appareil à pile à combustible contient au moins une pile à combustible choisie dans le groupe formé d'une pile à combustible à polymère solide, d'une pile à combustible à carbonate fondu, d'une pile à combustible alcaline, d'une pile à combustible à l'acide phosphorique et d'une pile à combustible à oxyde solide.
